# EUROPÄISCHE PATENTANMELDUNG

(11) **EP 0 894 519 A1**
(43) Veröffentlichungstag der Anmeldung: **03.02.1999**
(21) Anmeldenummer: 98114132.8
(22) Anmeldetag: 29.07.1998
(51) Int. Cl.: B01D 39/16, B01D 46/24

(54) **Filter mit Stützstrukturverbund**

(30) Priorität: 31.07.1997 DE 19733018
(71) Anmelder: H. Schmude GmbH, 33106 Paderborn (DE)
(72) Erfinder: Schmude, Hans-Joachim, 33813 Oerlinghausen (DE)
(74) Vertreter: Hanewinkel, Lorenz, Dipl.-Phys.

(57) **Zusammenfassung**

Es wird ein Verfahren angegeben, das zum Vermindern der Eluierbarkeit von Schwermetallen aus im Flüssigkeitsbad von Naßentaschern oder Naßentschlackern abgekühlten Aschen oder Schlacken oder Schlacken oder Aschen aus Entaschern oder Entschlackern von Anlagen zur thermischen Abfallbehandlung dient. Dabei werden die Aschen oder Schlacken in Gegenwart einer wässrigen Phase und/oder Wasserdampf einem erhöhten Druck ausgesetzt. Die verfahrensgemäße Behandlung führt dazu, daß die Schwermetallverbindungen in weniger lösliche Feststoffphasen überführt und/oder in weniger rasch mobilisierbare mineralische Matrizes eingebunden werden, so daß die Verfügbarkeit der Schwermetallverbindungen entscheidend verringert wird. Das Ausmaß der Löslichkeitsverminderung steigt sowohl mit dem angewandten Druck als auch mit der Dauer der Druckbehandlung.

## Beschreibung

Die Erfindung betrifft ein Verfahren zum Vermindern der Eluierbarkeit von Schwermetallen aus im Flüssigkeitsbad von Naßentaschern oder Naßentschlackern abgekühlten Aschen oder Schlacken oder Aschen oder Schlacken aus Entaschern oder Entschlackern von Anlagen zur thermischen Anfallbehandlung.

Die Entsorgung von kommunalen und industriellen Anfällen in Anlagen zur thermischen Anfallbehandlung mit dem Ziel der weitgehenden Zerstörung der im Abfall enthaltenen organischen Verbindungen liefert neben gasförmigen Produkten und Filterstaub feste Aschen oder Schlacken in einer Menge von 250 bis 350 kg je Tonne Abfall. Die Verbrennungs- und Pyrolyserückstände in Form von Aschen oder Schlacken enthalten - in unterschiedlichen Konzentrationen - eine Vielzahl von umweltrelevanten Einzelstoffen, die aufgrund unzureichender Temperaturen bei der thermischen Behandlung oder zu geringer Verweilzeiten oder wegen ihrer guten Löslichkeit in Wasser meist nur teilweise in die Asche- oder Schlackematrix eingebunden sind. Hierzu gehören vor allem Metalle, insbesondere Schwermetalle, und ihre Verbindungen, Reste von verschiedenen organischen Stoffen, anorganische Chloride und Sulfate sowie Stickstoffverbindungen.

Für die weitere Verwendung solcher Aschen oder Schlacken, beispielsweise in der Baustoffindustrie oder im Straßenbau, oder für die ordnungsgemäße und umweltverträgliche Deponierung ist entscheidend, daß die Aschen oder Schlacken auch im Langzeitkontakt mit Böden, Wasser und/oder Atmosphärilien lediglich Schadstoffe in solchen geringfügigen Mengen freisetzen, die unterhalb der durch Erfahrungswerte festgelegten Standards und gesetzlichen Richtlinien bleiben. Besondere Bedeutung kommt hierbei toxischen Schwermetallverbindungen wie des Bleis, Zinks, Cadmiums, Kupfers und anderen Schwermetallen zu, die sich in den Aschen oder Schlacken von Rückständen bei der thermischen Abfallbehandlung anreichern und bei pH-Änderung des umgebenden Mediums, beispielsweise durch Kontakt mit Bodenwasser oder Regenwasser, in nicht unerheblichem Umfang freigesetzt werden.

Für die Verminderung der Schwermetallmobilisierung aus Rückständen von Anlagen zur thermischen Abfallbehandlung existieren grundsätzlich zwei unterschiedliche Strategien. Zum einen wird versucht, einen möglichst großen Teil der Schwermetalle oder Schwermetallverbindungen in verschiedenen der thermischen Abfallbehadlung nachgeschalteten Stufen, wie etwa in Naßentaschern oder zusätzlichen Laugungsstufen, durch geeignete Extraktionsmittel zu lösen und anschließend von der Feststoffmatrix abzutrennen.

So wird in DE 44 27 899 A1 ein Verfahren beschrieben, bei dem die Aschen oder die aus ihnen durch Separierung abgetrennten schwermetallreichen Feinfraktionen mit verdünnter Salzsäure gewaschen und die dabei entstehenden schwermetallhaltigen Lösungen vom festen Rückstand getrennt und in geeigneter Weise weiter aufbereitet werden. Die Einstellung von pH-Werten < 5 durch Säurezugabe zu der basisch reagierenden Schlacke erhöht - wie beispielsweise in Gleis, M.; Hoffmann, G: Behandlungsverfahren zur Verbesserung der Umweltverträglichkeit von Rückständen aus der Verbrennung von Hausmüll, Fortbildungszentrum Gesundheits- und Umweltschutz Berlin (Hrsg.), Seminar Rückstände aus Abfallverbrennungsanlagen 31 (1992) 43-61 beschrieben ist - die Löslichkeit der meisten Schwermetalle beträchtlich.

In EP 0 730 884 A1 wird demgegenüber vorgeschlagen, die schwermetallhaltigen Rückstände mit wäßrigen Lösungen von Chelatkomplexbildnern, wie Gluconsäure, Melasse oder ähnlichen Verbindungen mit mindestens zwei metall-koordinierenden Ankergruppen, zu extrahieren und die Extrakte separat zu behandeln.

Die zweite Gruppe von bekannten Verfahren zur Verminderung der Elutionsneigung von Schadstoffen aus Verbrennungsaschen schlägt die Behandlung der Aschen oder Schlacken mit solchen chemischen Zusätzen vor, durch die die Löslichkeit von Schwermetallverbindungen verringert oder die Mobilisierung von Schwermetallen aus den festen Rückständen verlangsamt wird.

Es ist bekannt, daß amphotere Schwermetallhydroxide in pH-Bereichen zwischen 8 und 11 am wenigsten löslich sind. Da Müllverbrennungsaschen infolge ihres Gehalts an Calciumoxid oder Calciumhydroxid bei Kontakt mit Wasser im allgemeinen stark basisch reagieren (pH-Werte der gesättigten Lösungen zwischen 10 und 13), ist in EP 0 538 598 B1 vorgeschlagen worden, den im Flüssigkeitsbad eines Entaschers abgekühlten Schlacken als chemische Puffer wirkende Zusätze zuzuführen, durch die der pH-Wert der flüssigen Phasen auf Werte zwischen 10,5 und 7 gestellt wird. Damit soll erreicht werden, daß die amphoteren Schwermetallhydroxide oder -oxide wenigstens teilweise in schwerlösliche Carbonate überführt werden, die vorzugsweise als Sediment abgeschieden werden. Als puffernde Zusätze sind beispielsweise Schwefelsäure, vor allem Abfallschwefelsäure, Hydrogencarbonate, Kohlendioxid, kohlendioxidhaltige Gase, gereinigtes Rauchgas mit 5 bis 15 Vol-% CO₂ und ähnliche Zusätze angewendet worden.

Ein ähnliches Verfahren wird auch in JP-A-56 067 572 beschrieben.

In DE 44 16 659 wird zudem vorgeschlagen, die die Baustoffeigenschaften von Schlacken negativ beeinflussende Eluierbarkeit von Chloriden und Sulfaten durch Zusatz von 0,5 Gew-% Aluminiumhydroxid sowie Calciumoxid und/oder Calciumhydroxid zu vermindern.

Die bekannten Verfahren zur Verminderung der Schwermetallelution sind jedoch mit erheblichen Nachteilen verbunden. So wurde gefunden, daß die saure Wäsche selbst bei pH-Werten < 4 allenfalls zu einer teilweisen Extraktion der Schwermetalle führt, andererseits aber die mechanischen Eigenschaften der Schlacken drastisch verschlechtert. Die Extraktion mit Chelatkomplexbildnern verursacht zusätzliche Aufwendungen zur Aufarbeitung des Extrakts und zur Rückgewinnung der Chelatliganden. Außerdem sind zusätzliche Waschstufen erforderlich, weil andernfalls Kohlenstoffgehalt (TOC) und Glühverlust der Schlacken unzulässig erhöht werden. Die pH-Wert-Regulierung zur Einstellung des dem Löslichkeitsminimum entsprechenden optimalen pH-Wertes ist regelungstechnisch aufwendig, verläuft aufgrund des stark heterogenen Charakters der Aschen oder Schlacken vielfach unvollständig und bleibt in ihrer Wirkung auf die oberflächennahen Schichten begrenzt.

Der Erfindung liegt die Aufgabe zugrunde, ein einfaches und kostengünstiges Verfahren zu entwickeln, das den Gehalt an eluierbaren Schwermetallverbindungen in Aschen oder Schlacken deutlich vermindert und gleichzeitig die Wirksamkeit des Verfahrens wesentlich verbessert.

Die Aufgabe wird erfindungsgemäß dadurch gelöst, daß die Aschen oder Schlacken in Gegenwart einer wäßrigen Phase und/oder Wasserdampf einem erhöhten Druck ausgesetzt werden. Weitere Vorteile und Einzelheiten sind in den Unteransprüchen angegeben.

Die verfahrensgemäße Behandlung führt - wie Untersuchungen gezeigt haben - dazu, daß die Schwermetallverbindungen in weniger lösliche Feststoffphasen überführt und/oder in weniger rasch mobilisierbare mineralische Matrizes eingebunden werden, so daß ihre Verfügbarkeit entscheidend verringert wird. Das Ausmaß der Löslichkeitsverminderung steigt sowohl mit dem angewandten Druck als auch mit der Dauer der Druckbehandlung. Deutliche Verbesserungen der nach dem Standardverfahren DEV S4 erhaltenen Eluatwerte für Schwermetalle werden bereits bei Druckstufen > 2 bar und bei Verweilzeiten von 10 bis 15 Minuten beobachtet.

In besonders bevorzugten Ausführungsvarianten des erfindungsgemäßen Verfahrens werden Drücke von 5 bis 15 bar und Verweilzeiten von 15 bis 60 Minuten angewendet. Für das erfindungsgemäße Verfahren ist weiterhin kennzeichnend, daß die Atmosphäre über dem zu behandelnden Feststoffgemisch während der Druckbehandlung zumindest teilweise aus Wasserdampf besteht. Es ist überraschend, daß bei Anwendung des erfindungsgemäßen Verfahrens auch die Eluatwerte für Calciumsalze und Sulfate stark vermindert werden. Dies läßt darauf schließen, daß im Verlauf der Behandlung die in den Aschen als Festphasen vorliegenden Calciumoxide oder -hydroxide zumindest teilweise in Calciumsilicate, stabilere CaO-Al₂O₃-SiO₂-Phasen oder ettringitartige Feststoffphasen umgewandelt werden, die einen Teil der Schwermetalle einschließen und den Phasenbestand natürlicher Gesteine annähern. Wie die Untersuchungen gezeigt haben, werden die mechanischen Eigenschaften der Aschen oder Schlacken durch die Druckaufgabe nicht nachteilig beeinflußt. Es ist sogar ein positiver Nebeneffekt der erfindungsgemäßen Lösung, daß im Ergebnis von Agglomerationsvorgängen eine Kornvergröberung oder Verfestigung des behandelten Materials eintritt.

Die Erfindung wird nachstehend anhand eines Ausführungsbeispiels näher erläutert.

Etwa 1 kg Asche der Korngröße < 9,5 mm werden in einem Autoklaven vorgelegt und mit Wasser so überschichtet, daß die Oberfläche der Asche gerade bedeckt ist (Volumen des Wassers ca. 300 ml). Anschließend wird der Autoklav verschlossen. Dann wird der Reaktormantel aufgeheizt, so daß Drücke von 5, 10 oder 13 bar aufgegeben werden. Die Verweilzeit bei konstantem Druck beträgt für alle Versuche 120 min. Direkt nach der Druckbehandlung werden die Aschen nach DEV S4 eluiert und die Eluate analysiert.

### Ergebnistabelle:

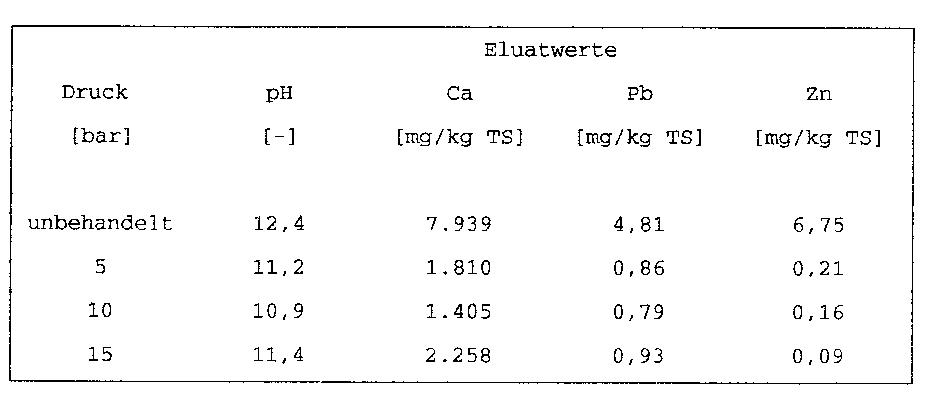

Die Ergebnisse der durchgeführten Versuche weisen aus, daß die Eluierbarkeit bestimmter Schwermetalle eindrucksvoll gemindert wird. Die Untersuchung unbehandelter Asche zeigt eine Blei-Konzentration im Eluat von 4,81 mg/kg Trockensubstanz. Bei der behandelten Asche wird der Bleigehalt des Eluats auf Werte unterhalb von 1 mg/kg Trockensubstanz reduziert. Noch deutlichere Reduktionen werden für das ebenfalls amphotere Schwermetall Zink erhalten. Hier reduzieren sich die Eluatkonzentrationen von 6,75 mg/kg Trockensubstanz auf Werte um 0,2 mg. Dies entspricht einer mittleren Reduktion von 93%.

Zur Ergänzung sind in der Ergebnistabelle die Intensität der Druckbehandlung, der sich einstellende pH-Wert des Eluates und die Calcium-Konzentration aufgeführt. Mit zunehmender Intensität der Druckbehandlung tritt eine zunehmende Reduktion der Eluatkonzentrationen für Zink auf.

Die Reduktion der Bleikonzentrationen im Eluat hängt ebenfalls von der Behandlungsdauer ab, wobei sich zusätzlich Störeinflüsse bemerkbar machen, die sich auch auf den pH-Wert und die Calciumkonzentration im Eluat auswirken. Die Störeinflüsse sind auf natürliche Schwankungen in der Zusammensetzung von Rostaschen zurückzuführen. Die Versuchsergebnisse weisen aus, daß die Reduktion der Bleieluatkonzentration im Mittel 82% beträgt.

Die Darstellung der Ergebnisse beschränkt sich, stellvertretend für die Stoffgruppe der amphoteren Metalle, auf die beiden Schwermetalle Blei und Zink. Durch eine analoge Behandlung von Verbrennungsrückständen werden die Eluatkonzentrationen auch anderer amphoterer Metalle und deren Verbindungen wirkungsvoll gemindert.

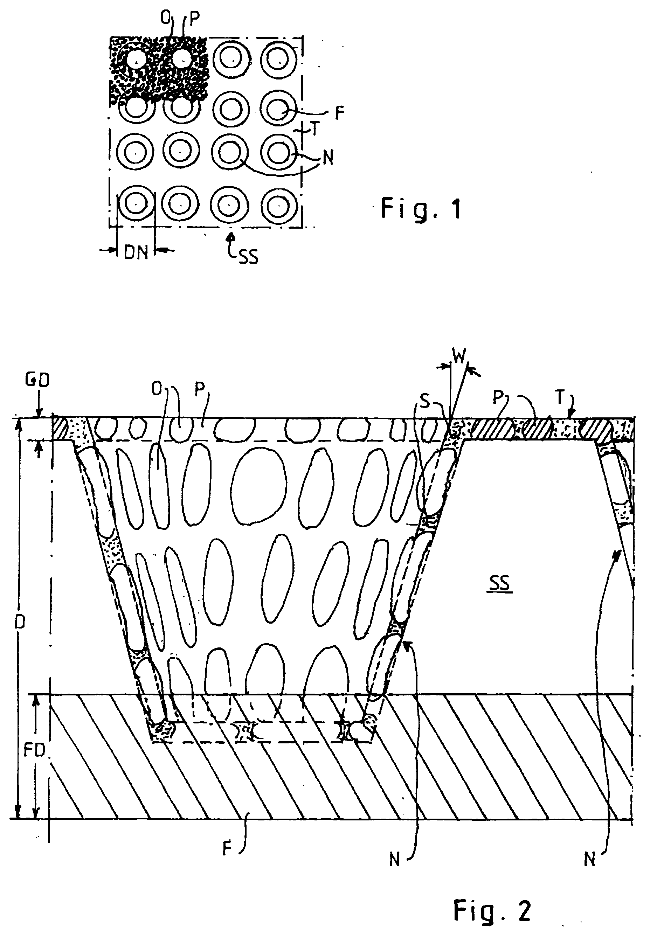

## Patentansprüche

1. Verfahren zum Vermindern der Eluierbarkeit von Schwermetallen aus im Flüssigkeitsbad von Naßentaschern oder Naßentschlackern abgekühlten Aschen oder Schlacken oder Aschen oder Schlacken aus Entaschern oder Entschlackern von Anlagen zur thermischen Abfallbehandlung, dadurch gekennzeichnet, daß die Aschen oder Schlacken in Gegenwart einer wäßrigen Phase und/oder Wasserdampf einem erhöhten Druck ausgesetzt werden.

2. Verfahren nach Anspruch 1, dadurch gekennzeichnet, daß die Aschen oder Schlacken bei einem Druck von 2 bis 20 bar, vorzugsweise 5 bis 15 bar, und für einen Zeitraum von 5 bis 240 Minuten, vorzugsweise 15 bis 60 Minuten, behandelt werden.

3. Verfahren nach einem der Ansprüche 1 und 2, dadurch gekennzeichnet, daß die Gasphase über den Aschen oder Schlacken während der Druckbehandlung in Sättigung an Wasserdampf gehalten wird.

4. Verfahren nach einem der Ansprüche 1 bis 3, dadurch gekennzeichnet, daß die Druckbehandlung bei Raumtemperatur oder bei Temperaturen bis maximal 200 °C vorgenommen wird.
